# EUROPEAN PATENT APPLICATION

(11) **EP 4 541 770 A1**
(43) Date of publication of application: **23.04.2025**
(21) Application number: 23823720.0
(22) Date of filing: 02.06.2023
(51) Int. Cl.: C01G 49/02, C01G 49/06, B01J 20/04, B01J 20/30

(54) **COMPOSITE IRON OXIDE PARTICLE POWDER AND METHOD FOR MANUFACTURING SAME**

(30) Priority: 14.06.2022 JP 2022095967
(71) Applicant: Toda Kogyo Corp., Hiroshima-shi, Hiroshima 732-0828 (JP)
(72) Inventor: SAKAMOTO, Muneyoshi, Otake-shi, Hiroshima 739-0652 (JP); TAKAHASHI, Shinji, Otake-shi, Hiroshima 739-0652 (JP); MATSUI, Toshiki, Otake-shi, Hiroshima 739-0652 (JP)
(74) Representative: Schiweck Weinzierl Koch Patentanwälte Partnerschaft mbB
(86) International application number: PCT/JP2023/020574
(87) International publication number: WO 2023/243427

(57) **Abstract**

The present disclosure provides a composite iron oxide particle powder comprising at least one or more sodium carbonates selected from NaHCO₃ and Na₂CO₃, in an amount greater than 25% by weight and up to 60% by weight, and having an Na/Fe molar ratio of from 0.4 to 1.2.

## Description

### TECHNICAL FIELD

The present disclosure provides a composite iron oxide particle powder for fixing carbon dioxide, and a method for producing the composite iron oxide particle powder.

### BACKGROUND ART

The United Nations Framework Convention on Climate Change (Paris Convention) was formulated in 2015, aiming at reducing greenhouse gas emissions, which are said to be a cause of the rise in average temperature across the world, to virtually zero, and suppressing the rise in the average temperature well below 2°C. Regarding the convention, the government's policy has set a medium-term goal of reducing greenhouse gas emissions by 26% from 2013 levels by 2030. The greenhouse gas is mainly carbon dioxide generated due to the combustion of fossil fuels. It has been reported that the concentration of carbon dioxide in the atmosphere was about 300 ppm in the 1950s, whereas it exceeded 400 ppm in recent years. As a trump card for reducing the amount of carbon dioxide released into the atmosphere, research on carbon dioxide capture, storage, and its recovery and utilization is underway.

Large-scale generation sources of carbon dioxide include outlets of exhaust gases generated from various places due to the combustion of fossil fuels. They also include thermal power plants that use coal, heavy oil, or natural gas as fuels, boilers in manufacturing factories, and kilns in cement factories. Carbon dioxide is also emitted from blast furnaces of steel plants that reduce iron oxide with coke, and transport means, such as automobiles, ships, and aircraft, that use gasoline, heavy oil, or light oil as fuels.

Currently, in large-scale facilities such as thermal power plants, carbon dioxide contained in exhaust gases is brought into contact with an aqueous solution of an amine, such as alkanolamine, to be absorbed. After that, it is heated to about 120° C to recover the absorbed carbon dioxide. These attempts have been started on a large scale and have been very effective (Patent Literatures 1 and 2). Since this method uses a liquid absorbent, it has an advantage that the absorbent can be transported via a pump. Therefore, it is easy to increase in size. Amine-based carbon dioxide recovery materials are increasingly put into practical use in thermal power plants and steel plants, for example.

In this respect, since this method uses a hazardous liquid, it is difficult to handle such hazardous liquid in small- and medium-sized facilities, such as waste incineration plants, present in 1800 or more locations in Japan. As a result, carbon dioxide is scarcely fixed and recovered at present. Currently, the total amount of carbon dioxide emitted across Japan is in a slight decrease trend. Therefore, it is expected that carbon dioxide is fixed and recovered by using an inexpensive, easy-to handle solid without using a hazardous substance, such as an amine, so that carbon dioxide can be fixed and recovered even in the small- and medium-sized facilities as described above.

Solids carrying alkanolamine as described above (Patent Literature 3), barium orthotitanate (Patent Literature 4), and lithium ferrite (Patent Literature 5) are so far known as a carbon dioxide fixation and recovery material in the form of solid.

Sodium ferrite (Patent Literature 6 and Non-patent Literatures 1 and 2) is also known as a material that can fix and recover carbon dioxide. Among them, in α-sodium ferrite having a layered rock salt structure (trigonal system), carbon dioxide and sodium react topochemically. That is, during the reaction with carbon dioxide, α-sodium ferrite becomes a mixed phase of Na₁₋ₓFeO₂ and sodium carbonate. It has been reported that the rate of the reaction is thus fast and the performance of repeated absorption and release of carbon dioxide in the reaction is excellent. On the other hand, it has been reported that sodium reacts with carbon dioxide in orthorhombic β-sodium ferrite, so that the crystalline phase of β-sodium ferrite absorbs a greater amount of carbon dioxide than the crystalline phase of α-sodium ferrite.

In general, the equation for reaction of sodium ferrite with carbon dioxide can be described as NaFeO₂+½CO₂→½Na₂CO₃+½ Fe₂O₃ when gas does not contain water vapor, and as NaFeO₂+CO₂+½H₂O→NaHCO₃+½Fe₂O₃ when gas contains water vapor. Therefore, sodium ferrite has an ability to adsorb and desorb theoretically up to from 18 % by weight to 30% by weight of carbon dioxide with respect to sodium ferrite.

### CITATION LIST

### PATENT LITERATURE

[Patent Literature 1] Japanese Laid-Open Patent Publication No. H05-301023
[Patent Literature 2] Japanese Laid-Open Patent Publication No. 2009-6275
[Patent Literature 3] Japanese Laid-Open Patent Publication No. 2012-139622
[Patent Literature 4] Japanese Laid-Open Patent Publication No. 2006-298707
[Patent Literature 5] Japanese Laid-Open Patent Publication No. 2005-270842
[Patent Literature 6] Japanese Laid-Open Patent Publication No. 2016-3156

### NON-PATENT LITERATURE

[Non-patent Literature 1] I. Yanase, S. Onozawa, K. Ogasawara, H. Kobayashi, J. CO2 Utilization, Vol. 24, 2018, pp. 200-209
[Non-patent Literature 2] Ikuo Yanase, Journal of the Society of Inorganic Materials, Japan, Vol. 25, 2018, pp. 437-442

### SUMMARY OF INVENTION

### TECHNICAL PROBLEM

As described above, there is expectation for carbon dioxide fixation and recovery materials formed from solid, particularly from non-hazardous inorganic materials. In this respect, while the current fixation and recovery of carbon dioxide using an aqueous amine solution is performed at about 120°C, the carbon dioxide fixation and recovery material using an inorganic material, such as barium orthotitanate (Patent Literature 4) and lithium ferrite (Patent Literature 5), adsorbs and desorbs carbon dioxide in temperature ranges of 200°C or higher and has poorer energy cost as compared to those using the aqueous amine solution.

That is, Patent Literatures 1 and 2 use an aqueous amine solution as a carbon dioxide fixation and recovery material, which is advantageous for large-sized facilities, such as thermal power plants, but is not suitable for small- and medium-sized facilities that emit carbon dioxide.

Patent Literature 3 also describes a carbon dioxide fixation and recovery material containing alkanolamine, where hazardous alkanolamine is used and concerns for elution of amine components are raised, and thus, it is not suitable for small- and medium-sized facilities.

Patent Literature 4 uses a Ba₂TiO₄-based composite oxide as a carbon dioxide fixation and recovery material. In this regard, since the heating temperature in a carbon dioxide release process is from 800°C to 1000°C, it has disadvantageous heat cost.

Patent Literature 5 uses a composite oxide containing lithium and iron as a carbon dioxide fixation and recovery material. In this regard, since the temperature for fixing and recovering carbon dioxide is 500°C and the temperature for releasing is 700°C, it has disadvantageous heat cost.

Patent Literature 6 and Non-patent Literatures 1 and 2 report fixation and recovery of carbon dioxide at room temperature and also provide a report relating to a porous body.

The present disclosure, therefore, has an object of providing a composite iron oxide particle powder which is capable of fixing carbon dioxide in a temperature range from room temperature to 100°C and recovering carbon dioxide by heating at 150°C or lower, and which has excellent formability and processability, and of providing a method for producing the particle powder.

### SOLUTION TO PROBLEM

To achieve the object, the inventors have found as a result of earnest study that a composite iron oxide particle powder having predetermined physical properties and composition ratio is used to be able to fix carbon dioxide in a temperature range from room temperature to 100°C and recover the fixed carbon dioxide at 150°C or lower, thus leading to finalization of the present disclosure.

Specifically, the composite iron oxide particle powder according to the present disclosure contains at least one or more sodium carbonates selected from NaHCO₃ and Na₂CO₃, in an amount greater than 25% by weight and up to 60% by weight, and has an Na/Fe molar ratio of from 0.4 to 1.2.

The sodium carbonate has the basic ability to adsorb and desorb carbon dioxide and the equation for absorption of carbon dioxide is described as Na₂CO₃+½CO₂+½H₂O→NaHCO₃. The equation for desorption (recovery) of carbon dioxide is described as NaHCO₃→½Na₂CO₃+½H₂O. In this respect, since sodium carbonate and sodium hydrogen carbonate are both relatively stable compounds, carbon dioxide absorption is not often possible even when a sodium carbonate powder itself is left in the atmosphere or brought into contact with combustion exhaust gas. Also, even when sodium hydrogen carbonate is heated at 150°C or lower, carbon dioxide release is not often possible. The sodium carbonate present together with an iron oxide component shows the ability to absorb and fix trace amounts of carbon dioxide present in the atmosphere, and carbon dioxide at high concentrations of from about 5% to about 20% contained in various combustion exhaust gases, and to recover the fixed carbon dioxide at 150°C or lower. Although the details are not clear, the iron oxide component contained allows the reaction represented by the equation (Fe₂O₃+½Na₂CO₃)+½CO₂+½H₂O→(Fe₂O₃+NaHCO₃), which progresses quantitatively at a low temperature of from 0°C to 50°C. Heating also allows the reaction represented by (Fe₂O₃+NaHCO₃)→(Fe₂O₃+½Na₂CO₃)+½CO₂+½H₂O, which progresses quantitatively at 150°C or lower.

The composite iron oxide particle powder according to the present disclosure preferably has primary particles that have an axial ratio of an average major axis diameter to an average minor axis diameter being from 1 to 2.

The particle powder has the primary particles that have a small axial ratio of the average major axis diameter to the average minor axis diameter being from 1 to 2, and has a shape close to a sphere, so that the particle powder can have high dispersibility, the primary particles less likely to aggregate, and excellent formability and processability.

The composite iron oxide particle powder according to the present disclosure preferably has a pH value of the powder being from 8 to 14.

When the pH value of the powder is from 8 to 14, the composite iron oxide particle powder according to the present disclosure is basic and thus facilitates capturing carbon dioxide that is weakly acidic. Further, as described above, alkaline components, such as free NaOH and Na₂CO₃, which cause gelation in a paint, are less likely to remain, so that use as a paint having high dispersibility is possible.

A method for producing a composite iron oxide particle powder according to the present disclosure includes the step of mixing an iron oxide particle powder with a particle powder of a sodium raw material to undergo a solid phase reaction at a temperature of from 150°C to 400°C under a carbon dioxide atmosphere.

In the method for producing a composite iron oxide particle powder according to the present disclosure, a solid is mixed with a solid, and the elements are moved and reacted without a solvent, namely, no solvent as a reaction mother liquor is used, and wastes, such as a solvent in the case of a liquid phase reaction, can be reduced. In particular, in the case of the solid phase reaction at a low temperature, the reaction can be performed at very high concentrations, and the energy cost can be kept low. Firstly, iron oxide particles and a sodium source are mixed and heated to obtain a solid solution of iron oxide and sodium. Further, the heating is performed under a carbon dioxide atmosphere, so that sodium in the solid solution is reacted with carbon dioxide to form composite iron oxide particles in which sodium carbonate and some sodium hydrogen carbonate are uniformly mixed in the iron oxide particles. In the method for producing a composite iron oxide particle powder according to the present disclosure, a composite iron oxide particle powder which is capable of fixing carbon dioxide in a temperature range from room temperature to 100°C and recovering carbon dioxide by heating at 150°C or lower, and which has excellent formability and processability, can be produced with high purity and high efficiency.

### ADVANTAGEOUS EFFECTS OF INVENTION

The composite iron oxide particle powder according to the present disclosure is a non-hazardous inorganic material, and can fix carbon dioxide in a temperature range from room temperature to 100°C and recover the fixed carbon dioxide at 150°C or lower. Also, the particle powder has excellent dispersibility after being made into a paint and is thus suitable as a material with excellent formability and processability.

### BRIEF DESCRIPTION OF DRAWINGS

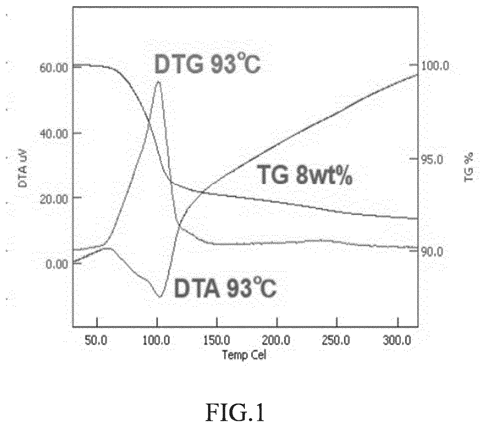

FIG.1 shows results of thermogravimetric analysis after fixing carbon dioxide using a composite iron oxide particle powder obtained in Example 1.

### DESCRIPTION OF EMBODIMENTS

An embodiment of the present disclosure will be explained in further detail as follows.

Firstly, a composite iron oxide particle powder according to one embodiment of the present disclosure is described.

The composite iron oxide particle powder in the embodiment contains at least one or more sodium carbonates selected from NaHCO₃ and Na₂CO₃, in an amount greater than 25% by weight and up to 60% by weight. When it has the percent by weight range as described above, the performance of fixing and recovering carbon dioxide can be enhanced. More preferably, the percent by weight range is from 30% by weight to 55% by weight.

A composite iron oxide particle powder according to one embodiment of the present disclosure has an Na/Fe molar ratio of from 0.4 to 1.2. When the Na/Fe molar ratio is less than 0.4, the powder has a low content of sodium ferrite particles to be produced, and the performance of fixing and recovering carbon dioxide is less effective. When the Na/Fe molar ratio is greater than 1.2, a large amount of alkaline components, such as NaHCO₃ and Na₂CO₃, remains. The alkaline components are also a cause of gelation in a paint, and are less likely to form a highly dispersible paint and to result in a particle powder having excellent formability and processability. Preferably, the Na/Fe molar ratio is from 0.5 to 1.1.

The composite iron oxide particle powder in the embodiment preferably includes an iron oxide component that is one or more of maghemite, hematite, magnetite, and goethite. Although the reason is not clear, it is preferable that the iron oxide component includes a trivalent iron ion. The content of the iron oxide component is preferably from 40% by weight to 75% by weight, more preferably from 45% by weight to 70% by weight.

The composite iron oxide particle powder in the embodiment preferably has a powder pH of from 8 to 14. The powder pH that is equal to or more than 8, and thus is basic, facilitates capturing carbon dioxide that is weakly acidic. On the other hand, the powder pH that is greater than 14 causes gelation in a paint, and is less likely to achieve high dispersibility. More preferably, the powder pH is from 12 to 13.5.

The composite iron oxide particle powder in the embodiment preferably has a BET specific surface area of from 1 m²/g to 7 m²/g. When the BET specific surface area is less than 1 m²/g, it is less likely to come into contact with carbon dioxide contained in a gas, and the performance of absorbing carbon dioxide is low. When the BET specific surface area is greater than 7 m²/g, industrial production is difficult. More preferably, the BET specific surface area is from 2 m²/g to 6 m²/g. Even more preferably, it is from 2 m²/g to 5.5 m²/g.

The composite iron oxide particle powder in the embodiment preferably has an average primary particle diameter of from 50 nm to 1000 nm. When the average primary particle diameter is less than 50 nm, industrial production is difficult. When the average primary particle diameter is greater than 1000 nm, the performance of absorbing carbon dioxide is low. The average primary particle diameter is more preferably from 100 nm to 700 nm.

The composite iron oxide particle powder in the embodiment preferably has primary particles that have an axial ratio (average major axis diameter / average minor axis diameter) of from 1.0 to 2.0. When the axial ratio is greater than 2, the primary particles tend to aggregate with each other and are difficult to maintain a highly dispersible state after being made into a paint. As a result, the axial ratio greater than 2 is less likely to result in a particle powder having excellent formability and processability. The axial ratio also cannot be less than 1. The axial ratio is more preferably in a range from 1.2 to 1.9, and even more preferably in a range from 1.3 to 1.8.

When the composite iron oxide particle powder in the embodiment is applied as a carbon dioxide fixation and recovery material, the composite iron oxide particle powder can selectively adsorb and fix carbon dioxide from a gas containing carbon dioxide. The temperature for the adsorption is from about 10°C to about 100°C, which is equivalent to from room temperature to temperatures of exhaust gas outlets. The temperature for the adsorption is more preferably from about 10°C to about 50°C. Since no additional heating from outside is required, the energy cost for the adsorption can be kept low (the preceding is the carbon dioxide fixation step).

The composite iron oxide particle powder in the embodiment preferably desorbs, at a temperature greater than 50°C and up to 150°C and under a gas atmosphere free of carbon dioxide, the carbon dioxide incorporated in the carbon dioxide fixation step as described above, to recover the carbon dioxide. Since the temperature for the desorption is as low as 150°C or lower, the energy cost for the desorption can be kept low (the preceding is the carbon dioxide recovery step).

When the composite iron oxide particle powder in the embodiment is brought into contact with carbon dioxide as a carbon dioxide fixation and recovery material, the superficial velocity of an adsorption tower can be controlled. That is, the composite iron oxide particle powder may be granulated or supported on a carrier to form a formed spherical product having a diameter of about 100 µm to about 10 mm. More preferably, it is a formed spherical product having a diameter of 200 µm to 7 mm. The formed product including the composite iron oxide particle powder preferably has a specific surface area of 1 m²/g to 1000 m²/g, so that the contact with carbon dioxide is not hindered even when the diameter of the formed product is increased. The formed product has a shape that is not particularly limited, and preferably has a spindle shape, rectangular parallelepiped shape, or dice shape, in addition to the spherical shape. Also, for example, the composite iron oxide particle powder is made into a paint to apply to a mesh, non-woven fabric, and honeycomb so that carbon dioxide can be fixed and recovered, or the composite iron oxide particle powder is filled in a column to provide a filter so that carbon dioxide can be fixed and recovered.

Next, a method for producing a composite iron oxide particle powder according to one embodiment of the present disclosure is described.

The composite iron oxide particle powder in the embodiment can be obtained by mixing an iron oxide particle powder with a particle powder of sodium raw material to heat at a temperature of from 150°C to 400°C under a carbon dioxide atmosphere and thereby undergo a solid phase reaction.

The iron oxide particle powder and the sodium source are mixed and heated as described above to obtain a solid solution of iron oxide and sodium. Further, the heating is performed under a carbon dioxide atmosphere, so that sodium in the solid solution is reacted with carbon dioxide to form composite iron oxide particles in which sodium carbonate and some sodium hydrogen carbonate are uniformly mixed in the iron oxide particles.

For the iron oxide particle powder, for example, hematite, magnetite, maghemite, and goethite can be used.

The iron oxide particle powder has a shape that can be selected from a needle shape, spindle shape, granular shape, spherical shape, tetrahedron, hexahedron, and octahedron, for example.

The iron oxide particle powder has a particle diameter that can be selected from any diameters from 10 nm to 1 µm.

For the particle powder of sodium raw material, for example, sodium nitrite, sodium sulfate, sodium carbonate, sodium hydrogen carbonate, sodium hydroxide, and sodium oxide can be used. In this regard, when industrial use is considered, sodium nitrite and sodium sulfate, which may produce toxic nitrous acid gas or sulfurous acid gas during production, may be avoided.

In general, the solid phase reaction is a synthetic method in which a solid is mixed with a solid and the elements are moved and reacted without a solvent. Since no solvent as a reaction mother liquor is used, wastes, such as a solvent in the case of a liquid phase reaction, can be reduced. Also, in the case of the solid phase reaction at a low temperature, which characterizes the present disclosure, the reaction can be performed at very high concentrations, and the energy cost also can be kept low. Moreover, a high yield of the product can be expected due to the high reaction concentrations and no washing required.

Further, the solid phase reaction in the presence of carbon dioxide is preferable since a trace amount of water is present at the contact interface between iron oxide and the sodium source to facilitate acid-base reaction at the contact interface. An atmosphere containing at least 1% or more carbon dioxide is preferable, and an atmosphere containing 2% to 80% carbon dioxide is more preferable.

Further, the solid phase reaction at 400°C or lower using water vapor as a heat source is preferable since the heat is uniformly transmitted at the contact interface between iron oxide and the sodium source.

### <Function>

In the embodiment, the composite iron oxide particle powder containing at least one or more sodium carbonates selected from NaHCO₃ and Na₂CO₃, in an amount greater than 25% by weight and up to 60% by weight, and having an Na/Fe molar ratio of from 0.4 to 1.2, further has excellent properties of adsorbing carbon dioxide in a gas, capturing it in a solid, and releasing carbon dioxide when heated. It can recover fixed carbon dioxide at a lower temperature than pure NaHCO₃ and Na₂CO₃. Although the details are not clear, it is considered that the presence of the iron oxide component causes a catalytic action where application of lower energy allows separation of carbon dioxide, or return to the composite of the iron oxide component and sodium carbonate, from the composite of the iron oxide component and sodium hydrogen carbonate that incorporates carbon dioxide. Also, the particle powder according to the present disclosure has an Na/Fe molar ratio of from 0.4 to 1.2, so that it can contain a large amount of sodium component and has a good performance of fixing and recovering carbon dioxide. Further, the proportion of Na is not excessively high, and alkaline components, such as free NaOH and Na₂CO₃, which cause gelation in a paint when the particle powder is made into the paint, are less likely to remain, so that a paint having high dispersibility can be obtained. As a result of these characteristics, the composite iron oxide particle powder according to the present disclosure can fix carbon dioxide in a temperature range from room temperature to 100°C and recover the fixed carbon dioxide at 150°C or lower.

### EXAMPLES

A representative embodiment of the present disclosure is described as follows.

A composite iron oxide particle powder according to the present disclosure and elements (excluding oxygen) in raw materials were analyzed using a scanning fluorescent X-ray analyzer ZSX Primus II manufactured by Rigaku.

The percent by weight of the crystalline phase in the composite iron oxide particle powder according to the present disclosure was identified and quantified using a fully automatic multipurpose X-ray diffractometer D8 ADVANCE manufactured by BRUKER.

The BET specific surface area of the composite iron oxide particle powder according to the present disclosure was measured using the BET method that utilizes nitrogen, by using Multisorb-16 manufactured by QUANTA CHROME.

The average major axis diameter and the average minor axis diameter of primary particles of the composite iron oxide particle powder according to the present disclosure were obtained by measuring respective major axis and minor axis diameters in particle diameters of 350 primary particles that were shown in micrograph from a scanning electron microscope S-4800 manufactured by Hitachi High-Tech Corporation, and by having average values therefrom.

The axial ratio of the composite iron oxide particle powder according to the present disclosure is shown as a ratio of the average major axis diameter to the average minor axis diameter (average major axis diameter/average minor axis diameter).

The average primary particle diameter of the composite iron oxide particle powder according to the present disclosure is shown as an average value of the average major axis diameter and the average minor axis diameter.

The pH value of powder for the composite iron oxide particle powder according to the present disclosure was obtained from the following procedures: 5 g of a sample was weighed in a 300 ml Erlenmeyer flask, 100 ml of boiled pure water was added to it, it was heated to maintain a boiling state for about 5 minutes, the flask was then plugged and allowed for cooling to room temperature, water corresponding to the reduced amount was added and the flask was plugged again to be shaken for 1 minute and allowed for standing still for 5 minutes, the pH of the resultant supernatant was measured according to JIS Z8802-7, and the obtained value was used as the pH value of the powder.

The carbon dioxide fixation and recovery ability of the composite iron oxide particle powder according to the present disclosure was obtained from the following procedures: 100 mg of a sample was placed on a combustion boat and then placed in an acrylic pipe equipped with inlet and outlet pipes, a mixed gas (carbon dioxide + nitrogen) adjusted to have a humidity range of 20% to 100% and a carbon dioxide concentration range of 1 vol % to 100 vol % was introduced from the inlet at 500 mL/min, and for obtaining the adsorption amount of carbon dioxide after 2 hours, the sample was heated from room temperature to 200°C in a differential heat / simultaneous thermogravimetric device STA7000 manufactured by Hitachi High-Tech Corporation, and the carbon dioxide fixation and recovery amount was determined from its mass loss due to heating.

To evaluate the dispersibility of the composite iron oxide particle powder according to the present disclosure, 10 parts by weight of the composite iron oxide particle powder was weighed, and 1 part by weight of alkylamine, 89 parts by weight of propylene glycol monomethyl ether acetate, and 100 parts by weight of 1.5 mm glass bead were added. Then, the mixture was shaken in a paint shaker for 2 hours, and the glass beads were separated and removed from the slurry. The dispersed particle diameter of the resultant slurry was measured using a concentrate particle diameter analyzer FPAR1000 manufactured by Otsuka Electronics. When the cumulative 50% value (D50) of the scattered intensity distribution was 2 times or less the average primary particle diameter, samples were determined to have good dispersibility and were evaluated as "Y", and when it was more than 2 times, the samples were evaluated as "N".

### <Method for producing composite iron oxide particle powder>

### Example 1

Iron oxide fine particles 1 (100ED manufactured by Toda Kogyo Corp., hematite, specific surface area 11 m²/g) were weighed to have 10 parts by weight, and a sodium hydroxide particle powder as a sodium raw material was weighed to be Na/Fe=1.0 (molar ratio), and added thereto. The raw materials were mixed and then pulverized in a sample mill, while being mixed. This mixed and pulverized product was placed in a crucible and subjected to a solid phase reaction at 400°C for 16 hours under a nitrogen atmosphere containing 10% carbon dioxide. Then, it was cooled to room temperature and pulverized in a sample mill to obtain a composite iron oxide particle powder. The obtained particle powder had a BET specific surface area of 4.0 m²/g. The primary particles were quantified by using a scanning electron microscope to obtain an average major axis diameter of 0.7 µm, an average minor axis diameter of 0.4 µm, an average primary particle diameter of 0.55 µm, and an axial ratio of 1.8. The powder pH was 13.8.

When the elements contained in the obtained composite iron oxide particle powder were analyzed by using fluorescent X-ray, the Na/Fe molar ratio was 1.0, and when quantification from the powder X-ray diffraction pattern was performed, the obtained powder was found to include 51% by weight of sodium carbonate and 49% by weight of maghemite (γ-Fe₂O₃).

To study the carbon dioxide fixation and recovery performance of the obtained composite iron oxide particle powder, 1.00 part by weight of a sample was placed on a No. 2 combustion boat (12×60×9 mm), and a model combustion exhaust gas at 500 mL/min was supplied for 3 hours. Generally, the exhaust gas emitted when fuel is burned in the atmosphere is composed of a maximum of 80 vol % nitrogen, 20 vol % carbon dioxide, and 80 to 100% humidity. Therefore, nitrogen at 400 mL/min and carbon dioxide at 100 mL/min were mixed at room temperature of 25°C to be bubbled into water, so that the model combustion exhaust gas having 20 vol % carbon dioxide and 80% relative humidity was obtained.

After supplying the gas, the sample was weighed in an amount of 10 mg, and heated to 200°C at 10° C/min using a thermogravimetric device, while dry air is supplied at 300 mL/min, to measure a desorption temperature and a desorption amount of carbon dioxide that had adsorbed on the sample. FIG.1 shows a chart of measurements with sample temperatures along the horizontal axis. The TG curve shows % by weight of the residual sample at each temperature when the initial amount was 100% by weight, and the reduced amount in the sample was considered due to the release of carbon dioxide. The DTG curve is a differential curve of the TG curve, and the temperature at a local maximum value of the DTG curve was considered as the desorption temperature of carbon dioxide. The DTA curve shows a downwardly convex curve, and it was found that the endothermic reaction was carried out at around 99°C. When this was regarded as a reaction of thermal decomposition of NaHCO₃ and quantified, the desorption temperature of carbon dioxide was 93°C, and the desorption amount of carbon dioxide was 8% by weight with respect to the sample solid content, evidently showing excellent performance of fixing and recovering carbon dioxide.

Further, when the sample after supplying the gas was reprepared and the weight was measured, it was 1.40 parts by weight and an increase in mass of 40% by weight was confirmed. When the X-ray diffraction was measured on this sample, NaHCO₃ and γ-Fe₂O₃ were found, and it is considered that carbon dioxide was absorbed and the reaction represented by ½Na₂CO₃+CO₂+H₂O→NaHCO₃ was elicited. Also, this sample was heated in an electric furnace at 120°C for 1 hour and the weight was measured, it was 1.32 parts by weight and it was found that 0.08 parts by weight (8% by weight with respect to the solid content) of carbon dioxide was able to be adsorbed and desorbed in this cycle. Further, when this sample was brought into contact with carbon dioxide in the same manner as those described above, the amount was increased to 1.40 parts by weight, and when the sample was heated, the amount was decreased to 1.32 parts by weight, and thus, 0.08 parts by weight of carbon dioxide was able to be absorbed and desorbed. This procedure was repeated 10 times and it was found that there was no change in mass increase and decrease. Thus, it was shown that the composite iron oxide particle powder was excellent in performance of fixing and recovering carbon dioxide, particularly in repeatability.

When the dispersibility of the obtained composite iron oxide particle powder was evaluated, the dispersed particle diameter was within twice the average primary particle diameter, which was good.

### Examples 2 to 5

The composite iron oxide particle powder according to the present disclosure was obtained in the same manner as in Example 1 except for variously changed types and amounts of the iron oxide fine particles and the sodium source.

Table 1 shows production conditions in the examples, and Table 2 shows various characteristics of the obtained composite iron oxide particle powder, and Table 3 shows carbon dioxide fixation and recovery performance and dispersibility thereof. The performance of recovering carbon dioxide was evaluated to be "Y" when the carbon dioxide concentration was 2500 ppm or lower, and "N" when the carbon dioxide concentration was more than 2500 ppm, 30 minutes after 10 g of the carbon dioxide absorbent was introduced into a desiccator (13 L) having a carbon dioxide concentration of 4000 ppm. The samples having good dispersibility were shown with Y and those not having good dispersibility is shown with N in Table 3.

### Comparative Example 1

Iron oxide 1 was weighed to have 10 parts by weight, and a sodium hydroxide particle powder was weighed to be Fe:Na=1:1 (molar ratio), and 100 parts by weight of pure water was added to dissolve the sodium hydroxide particle powder, and kneading was performed in an automatic mortar grinder for 2 hours. This was dried at 80°C for 2 hours and mixed and pulverized in a sample mill. This mixed and pulverized product was placed in a crucible and heat-treated at 400°C for 16 hours. The product was found to include 25% by weight of sodium carbonate by using powder X-ray diffraction. The BET specific surface area was 1.0 m²/g. The axial ratio was 3.8. Further, when the carbon dioxide fixation and recovery performance was studied in the same manner as in the examples, the desorption of carbon dioxide could not be found even when the temperature was raised to 200°C.

Table 1 shows production conditions in the comparative example, and Table 2 shows various characteristics of the obtained composite iron oxide particle powder, and Table 3 shows carbon dioxide fixation and recovery performance and dispersibility thereof.

**Table 1**

| | Iron oxide particle | | | | Sodium raw material | Raw material preparation Na/Fe (molar ratio) | Heat-treatment | |
|---|---|---|---|---|---|---|---|---|
| | Iron oxide name | type | shape | BET (m²/g) | | | Temperature (°C) | Time (hr) |
| Example 1 | Iron oxide 1 | Hematite | Granule | 11 | Sodium hydroxide | 1.0 | 400 | 16 |
| Example 2 | Iron oxide 2 | Hematite | Granule | 7 | Sodium hydroxide | 1.1 | 400 | 16 |
| Example 3 | Iron oxide 3 | Magnetite | Sphere | 4 | Sodium carbonate | 1.2 | 300 | 16 |
| Example 4 | Iron oxide 4 | Magnetite | Sphere | 10 | Sodium carbonate | 0.9 | 300 | 16 |
| Example 5 | Iron oxide 5 | Goethite | Needle | 20 | Sodium oxide | 0.8 | 200 | 16 |
| Comparative Example 1 | Iron oxide 1 | Hematite | Granule | 11 | Sodium hydroxide | 1.0 | 400 | 16 |

**Table 2**

| | Na/Fe (molar ratio) | Powder pH | BET | Primary particle | | | | Crystalline phase | |
|---|---|---|---|---|---|---|---|---|---|
| | | | | Average major axis diameter (*µ*m) | Average minor axis diameter (*µ*m) | Axial ratio (Average major axis diameter / Average minor axis diameter) | Average primary particle diameter (*µ*m) | Na₂CO₃ | γ-Fe₂O₃ |
| | | | (m²/g) | | | | | (% by weight ) | (% by weight ) |
| Example 1 | 1.0 | 13.8 | 4.0 | 0.7 | 0.4 | 1.8 | 0.55 | 51 | 49 |
| Example 2 | 1.1 | 12.8 | 2.7 | 0.6 | 0.5 | 1.2 | 0.55 | 33 | 62 |
| Example 3 | 1.2 | 13.4 | 2.2 | 0.8 | 0.5 | 1.6 | 0.65 | 27 | 66 |
| Example 4 | 0.9 | 11.8 | 5.3 | 0.4 | 0.2 | 2.0 | 0.30 | 42 | 53 |
| Example 5 | 0.8 | 12.9 | 2.5 | 0.7 | 0.5 | 1.4 | 0.60 | 37 | 60 |
| Comparative Example 1 | 1.0 | 12.1 | 1.0 | 2.3 | 0.6 | 3.8 | 1.45 | 25 | nd |

**Table 3**

| | CO₂ absorption performance | CO₂ desorption temperature | CO₂ saturation absorption amount | Dispersed particle diameter | Dispersed particle diameter/ Average primary particle diameter | Dispersibility |
|---|---|---|---|---|---|---|
| | | (°C) | (% by weight) | (*µ*m) | | |
| Example 1 | Y | 93 | 8 | 0.6 | 1.1 | Y |
| Example 2 | Y | 113 | 15 | 0.8 | 1.5 | Y |
| Example 3 | Y | 110 | 10 | 0.9 | 1.4 | Y |
| Example 4 | Y | 112 | 18 | 0.5 | 1.7 | Y |
| Example 5 | Y | 118 | 12 | 0.9 | 1.5 | Y |
| Comparative Example 1 | N | - | nd | sedimented, unmeasurable | - | N |

As described above, it is shown that the composite iron oxide particle powder according to the present disclosure can be used as a solid recovery material for carbon dioxide that is excellent in adsorbing and desorbing carbon dioxide. It is also shown that the particle powder has excellent dispersibility and thus is a particle powder having excellent formability and processability.

### INDUSTRIAL APPLICABILITY

The composite iron oxide particle powder according to the present disclosure is a material for fixing and recovering greenhouse gases, particularly carbon dioxide, as part of global warming countermeasures, and is suitable as a material with which, by using a non-hazardous inorganic material, carbon dioxide can be adsorbed and desorbed to perform fixation and recovery, without use of a hazardous substance, such as an aqueous amine solution.

## Claims

1. A composite iron oxide particle powder comprising at least one or more sodium carbonates selected from NaHCO₃ and Na₂CO₃, in an amount greater than 25% by weight and up to 60% by weight, and having an Na/Fe molar ratio of from 0.4 to 1.2.

2. The composite iron oxide particle powder according to claim 1, wherein an iron oxide component is one or more of maghemite, hematite, magnetite, and goethite.

3. The composite iron oxide particle powder according to claim 1 or 2, wherein a primary particle has an axial ratio of an average major axis diameter to an average minor axis diameter that is from 1 to 2.

4. The composite iron oxide particle powder according to claim 1 or 2, wherein a pH value of the powder is from 8 to 14.

5. A method for producing a composite iron oxide particle powder according to claim 1 or 2, comprising the step of mixing an iron oxide particle powder with a particle powder of a sodium raw material to undergo a solid phase reaction at a temperature of from 150°C to 400°C under a carbon dioxide atmosphere.
